# EUROPÄISCHE PATENTSCHRIFT

(11) **EP 2 182 341 B1**
(45) Veröffentlichungstag und Bekanntmachung des Hinweises auf die Patenterteilung: **12.12.2012**
(21) Anmeldenummer: 09173874.0
(22) Anmeldetag: 23.10.2009
(51) Int. Cl.: F15B 19/00, F16J 15/32, F16J 15/56, F15B 15/14, G01M 13/00

(54) **Elektrische Einrichtung zur Verschleißerkennung elastomerer dynamischer Dichtungen**
Electric device for detecting wear of elastomeric dynamic seals
Dispositif électrique pour la détection d'usure de joints dynamiques élastomères

(30) Priorität: 29.10.2008 DE 102008053710
(43) Veröffentlichungstag der Anmeldung: 05.05.2010
(73) Patentinhaber: ROBERT BOSCH GMBH, 70442 Stuttgart (DE)
(72) Erfinder: Meyer, Ernst-August, 30974, Wennigsen (DE)
(74) Vertreter: Kietzmann, Lutz

(56) Entgegenhaltungen:
- DE-A1- 19 724 308
- DE-A1-102007 007 405

## Beschreibung

Die vorliegende Erfindung betrifft eine elektrische Einrichtung zur Verschleißerkennung einer elastomeren dynamischen Kolbendichtung eines Druckmittelzylinders mit einem elektrisch leitfähigen Zylindergehäuse, an dessen Innenwandung eine mit abriebdetektierenden Verschleißerkennungsmitteln ausgestattete dynamische Kolbendichtung zur Anlage kommt, welche mit elektrischen Leitungsmitteln über eine Kolbenstange einen elektrischen Stromkreis mit dem Zylindergehäuse bildet, dessen Schließen einen Dichtungsverschleiß signalisiert. Ferner betrifft die Erfindung auch einen Druckmittelzylinder, welcher mit einer solchen elektrischen Einrichtung ausgestattet ist.

Vornehmliches Anwendungsgebiet derartiger elektrischer Einrichtungen sind Komponenten pneumatischer Systeme, wie Pneumatikzylinder. Unter dem Begriff Druckmittelzylinder wird hier allerdings jede Kolben-Zylinder-Anordnung verstanden, welche relativ zueinander bewegbare Bauteile besitzt, die gegeneinander dynamisch abzudichten sind, um einen ungewollten Leckagestrom des Druckmittels zu verhindern. Insoweit können auch beispielsweise vorgesteuerte Schieberventile, deren Ventilschieber gleich eines Kolbens gegenüber dem ortsfesten Ventilgehäuse bewegbar ist, mit der erfindungsgegenständlichen Lösung ausgestattet werden. Zum Zwecke einer dynamischen Abdichtung werden die hier interessierenden Komponenten der pneumatischen Systeme gewöhnlich Dichtungen aus Elastomermaterialien eingesetzt, die meistens nach Art eines O-Ringes oder eines Lippendichtrings ausgestaltet sind. Diese dynamischen Dichtelemente unterliegen im Laufe der Betriebszeit einem fortschreitenden Verschleiß aufgrund von Abrieb, Materialeigenschaftsänderungen und dergleichen.

Die DE 10 2006 001 131 A1 offenbart eine elektrische Einrichtung zur Verschleißerkennung bei einem dynamischen Dichtelement, bei welcher im verschleißrelevanten Bereich der Dichtung eine Sensoranordnung eingebettet ist. Diese Sensoranordnung kann vorzugsweise aus Dehnungsmessstreifen bestehen, um Zug- und Druckbeanspruchung der dynamischen Dichtung zu ermitteln. Ebenfalls im Dichtelement direkt integriert ist eine autonome elektronische Auswerteeinheit, welche aus den so erfassten Beanspruchungsmesswerten Rückschlüsse auf den Verschleißzustand des Dichtelements zieht. Nachteilig bei dieser technischen Lösung ist der recht aufwendige technische Aufbau, der durch die erforderliche Mikroelektronik sowie deren Integration in das Dichtelement bestimmt ist.

Aus der DE 10 2007 007 405 A1 geht eine weitere technische Lösung für eine elektrische Einrichtung zur Verschleißerkennung bei dynamischen Dichtelemente hervor, welche an einem elektrisch leitfähigen Tragekörper, vorzugsweise dem Kolben eines Druckmittelzylinders, angebracht ist und demgegenüber einem relativ hierzu bewegbaren ebenfalls elektrisch leitfähigen Gegenkörper, hier das Zylindergehäuse, dynamisch dichtet. Das dynamische Dichtelement besteht aus einem in Kontakt mit dem Trägerkörper stehenden elektrisch leitfähigen ersten Dichtmaterial, an dem ein elektrisch nicht leitendes zweites Material angebracht ist, das in dichtendem Kontakt mit dem elektrisch leitenden Gegenkörper kommt. Nach fortschreitendem Abrieb des zweiten die dynamische Dichtung bewirkenden Dichtmaterials wird ein Stromkreis zur Anzeige der Verschleißgrenze geschlossen. Der Stromkreis wird dabei zwischen dem elektrisch leitenden und das dynamische Dichtelement tragende Trägerkörper sowie dem Gegenkörper gebildet.

Hinsichtlich der bauteiltechnischen Ausbildung des Stromkreises sowie der Signalverarbeitung gibt dieser Stand der Technik keine weiterführenden Auskünfte. Es ist daher die Aufgabe der vorliegenden Erfindung, eine elektrische Einrichtung zur Verschleißerkennung einer elastomeren dynamischen Kolbendichtung zu schaffen, deren Anzeige des zu signalisierenden Dichtungsverschleißes mit einfachen technischen Mitteln kompaktbauend in den Stromkreis integriert und am Druckmittelzylinder angeordnet werden kann.

Die Aufgabe wird ausgehend von einer elektrischen Einrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zur Anzeige eines zu signalisierenden Dichtungsverschleißes am Druckmittelzylinder eine die Kolbenstange umgebende und mit dieser einerseits in elektrischem Kontakt stehende Anzeigeeinheit mit optischen und/oder akustischen Anzeigemitteln vorgesehen ist, welche in den Stromkreis eingefügt andererseits mit dem Zylindergehäuse in elektrischem Kontakt steht.

Der Vorteil der erfindungsgemäßen Lösung besteht insbesondere darin, dass sich eine derart am Druckmittelzylinder angeordnete und in den Stromkreis integrierte Anzeigeeinheit hinzufügen lässt, ohne die äußeren geometrischen Abmessungen des Druckmittelzylinders wesentlich zu vergrößern. Vor allem erzeugt die erfindungsgemäße Anzeigeeinheit keine zerklüftete Außenkontur des Druckmittelzylinders, welche regelmäßig Hygiene- und Reinigungsprobleme mit sich bringt. Die erfindungsgemäße Anzeigeeinheit ist an einer Stelle mit dem Druckmittelzylinder verbunden, an welcher auch der Stromkreis entlang läuft, so dass separate elektrische Zuführungsleitungen vollständig entbehrlich sind. Die elektrische Kontaktierung lässt sich seitens des metallischen Zylindergehäuses durch bloßen Gehäusekontakt herstellen, wogegen die elektrische Kontaktierung zur Kolbenstange hin sich vorzugsweise über einen hiergegen drückenden elektrischen Schleiferkontakt oder einen elektrisch leitenden Elastomerkörper herstellen lässt.

Vorzugsweise ist die Anzeigeeinheit ringförmig ausgebildet und zylinderdeckelseitig auf den Druckmittelzylinder aufgesteckt. Die Steckverbindung kann beispielsweise nach Art einer Clipverbindung oder eines Bayonettverschlusses ausgeführt sein und ermöglicht im geschlossenen Zustand durch Gegenlage korrespondierender elektrischer Kontakte auch die elektrische Verbindung. Alternativ hierzu ist es auch möglich, die elektrische Kontaktierung zwischen Anzeigeeinheit und Druckmittelzylinder über ein am Gehäuse der Anzeigeeinheit ausgebildetes Befestigungsgewinde herzustellen, das die mechanische Befestigung am Druckmittelzylinder durch Aufschrauben ermöglicht. In diesem Falle ist das Befestigungsgewinde seitens der Anzeigeeinheit ebenfalls zumindest teilweise metallisch auszuführen, um die gewünschte elektrische Kontaktierung sicherzustellen. Demgegenüber müssen andere Gehäuseteile der Anzeigeeinheit aus einem elektrischen Isolator, beispielsweise Kunststoff, bestehen, um eine elektrische Isolation gegenüber der Kolbenstange zur Vermeidung eines Kurzschlusses zu bilden.

Die Anzeigeeinheit umfasst vorzugsweise mindestens eine von außen her sichtbare Leuchtemitterdiode (LED) als Anzeigemittel. Es ist alternativ oder zusätzlich hierzu auch denkbar, ein akustisches Anzeigemittel in Form eines Mikrolautsprechers in die Anzeigeeinheit zu integrieren. Der Verschleiß kann insoweit optisch und/oder akustisch signalisiert werden.

Im Falle von optischen Anzeigemitteln wird gemäß einer weiteren, die Erfindung verbessernden Maßnahme vorgeschlagen, diese als Zustandsanzeige in Ampellogik auszubilden. Insoweit wird eine rote, eine gelbe und eine grüne Leuchtemitterdiode (LED) vorgeschlagen, welche fortschreitenden Verschleiß anzeigen. Solange die grüne Lichtemitterdiode leuchtet, hat die dynamische Dichtung noch nicht ihre Verschleißgrenze erreicht. Ein Aufleuchten einer gelben Lichtemitterdiode, welche durch einen separaten elektrischen Kontakt in der dynamischen Dichtung betrieben werden kann, signalisiert einen Übergangszustand und bei Aufleuchten der roten Leuchtemitterdiode ist die Verschleißgrenze der dynamischen Dichtung definitiv erreicht, so dass diese auszutauschen ist. Die Ampellogik gestattet es, eine Planung von Wartungsmaßnahmen vornehmen zu können, wobei gleichzeitig eine einfache und eindeutige Signalisierung des Verschleißzustandes erfolgt.

Zusätzlich wird gemäß einer anderen, die Erfindung verbessernden Maßnahme vorgeschlagen, dass die Anzeigeeinheit mit einem elektrischen Anschluss zur Weiterleitung des aktuellen Signals der Verschleißerkennung an eine übergeordnete Steuerung ausgestattet ist. Das aktuelle Signal kann hierdurch per Kabel an beispielsweise eine Maschinensteuerung weitergegeben werden, um dort aus- oder bewertet zu werden. Hierdurch ist neben der erfindungsgegenständlichen Vor-Ort-Erkennung auch eine zentrale Verschleißzustands-Auswertung möglich.

Optional kann der Erfindungsgegenstand dadurch weitergebildet werden, dass ein elektrisch leitende Elastomerkörper, welcher als Kontaktmittel zwischen Anzeigeeinheit und Kolbenstange dienen kann, gleichzeitig eine dynamische Dichtung zwischen Kolbenstange und Zylindergehäuse bildet und insofern die ansonsten übliche zylinderdeckelseitige dynamische Dichtung zur Abdichtung gegenüber der Kolbenstange ersetzt. Hieran können dann ebenfalls abriebdetektierende Verschleißerkennungsmittel angebracht werden, die in den Stromkreis zur Signalisierung eines Dichtungsverschleißes mit einbezogen sind. Durch diese Maßnahme lässt sich neben einer Verschleißerkennung für die Kolbendichtung auch eine Verschleißerkennung für die - allerdings weniger störungsanfällige - Kolbenstangendichtung realisieren.

Weitere, die Erfindung verbessernden Maßnahmen werden nachstehend gemeinsam mit der Beschreibung eines bevorzugten Ausführungsbeispiels der Erfindung anhand der Figuren näher dargestellt. Es zeigt:
- Fig.1: eine schematische Seitenansicht eines als Pneumatikzylinder ausgebildeten Druckmittelzylinders mit einer elektrischen Einrichtung zur Verschleißerkennung der elastomeren dynamischen Kolbendichtung, und
- Fig.2: eine schematische Detailansicht des Druckmittelyzlinders nach Fig.1 im Bereich der Anzeigeeinheit.

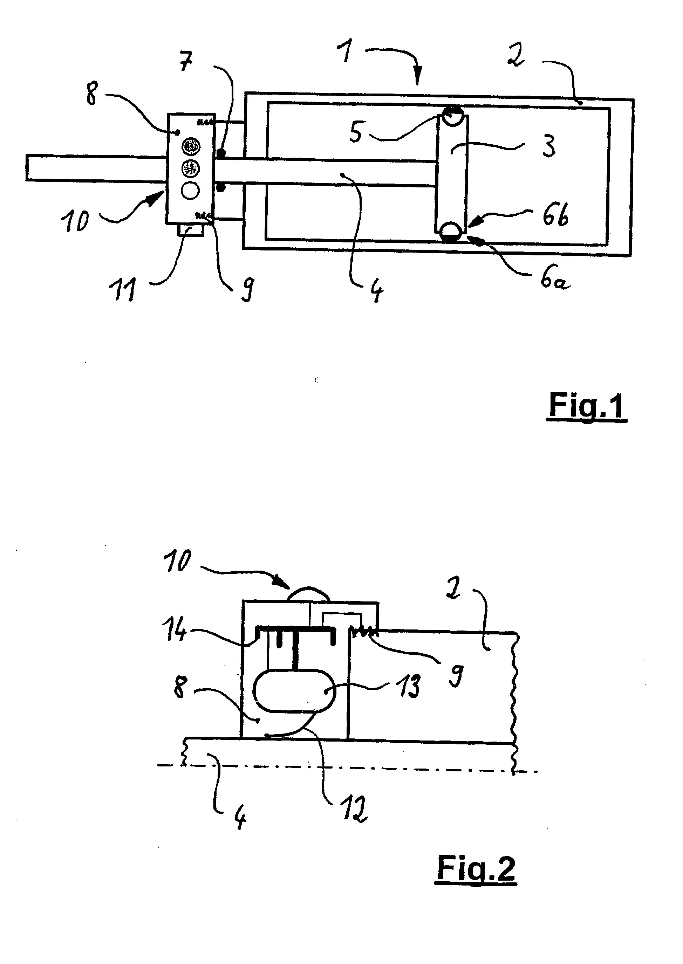

Gemäß Fig.1 besteht der Druckmittelzylinder 1 aus einem elektrisch leitfähigen Zylindergehäuse 2 aus Leichtmetall, in dessen Innerem ein axial verschiebbarer Kolben 3 mit hiervon ausgehender und nach außen führender Kolbenstange 4 angeordnet ist. Zur dynamischen Abdichtung des Kolbens 3 gegenüber der Innenwandung des Zylindergehäuses 2 ist der Kolben 3 mit einer Kolbendichtung 5 versehen. Die Kolbendichtung 5 weist einen mit der Innenwandung des Zylindergehäuses 2 zur Anlage kommenden elektrisch nichtleitenden Dichtungsabschnitt 6a sowie einen mit dem elektrisch leitfähigen Kolben 3 in Kontakt kommenden und von diesem gehaltenen elektrisch leitenden Dichtungsabschnitt 6b auf. Nach Abrieb des Dichtungsabschnitts 6a durch fortschreitenden Verschleiß wird eine elektrische Kontaktierung zwischen dem Zylindergehäuse 2 und dem Kolben 3 ausgelöst.

Es wird hinsichtlich des Druckmittelzylinders 1 ein elektrischer Stromkreis ausgehend vom Zylindergehäuse 2, über die hier als eine Art Schalter wirkende Kolbendichtung 5, diesen tragenden Kolben 3 mit hiervon abgehender Kolbenstange 4 gebildet. An der Stelle, an welcher die Kolbenstange 4 über einen Dichtring 7 dynamisch abgedichtet das Zylindergehäuse 2 verlässt, ist eine ebenfalls in den Stromkreis integrierte Anzeigeeinheit 8 angeordnet. Die Anzeigeeinheit 8 dient der Anzeige eines zu signalisierenden Dichtungsverschleißes und umgibt ringförmig die Kolbenstange 4. Mit dieser ist die elektrische Anzeigeeinheit 8 einerseits elektrisch kontaktiert; andererseits ist die Anzeigeeinheit 8 mit dem Zylindergehäuse 2 über ein Befestigungsgewinde 9 mechanisch und elektrisch kontaktiert.

Die Anzeigeeinheit 8 weist insgesamt drei als Anzeigemittel 10 dienende Lichtemitterdioden auf, welche einer optischen Signalisierung eines Dichtungsverschleißes dienen. Hierbei wird eine Ampellogik verwirklicht, um eine in einfacher Weise vor Ort zu erfassende Zustandsanzeige zu bilden, wobei eine grüne Lichtemitterdiode eine normale Funktion der dynamischen Dichtung signalisiert. Dagegen signalisiert eine rote Lichtemitterdiode eine verschlissene dynamische Dichtung, welche insoweit durch entsprechende Wartungsmaßnahmen auszutauschen ist. Eine dazwischenliegende gelbe Lichtemitterdiode zeigt einen Zwischenzustand an, welcher eine erforderliche Wartung in naher Zukunft signalisiert. Dieser Zwischenzustand kann bei einer dynamischen Dichtung 5, wie sie vorstehend beschrieben ist, dadurch ermittelt werden, indem die elektrische Kapazität der dynamischen Dichtung in einem hochfrequenten Wechselstromkreis gemessen wird. Die elektrische Kapazität an der dynamischen Dichtung 7 nimmt zu, wenn der Verschleiß fortschreitet, also ein zunehmender Abtrag des als Dieelektrikum wirkenden Dichtungsabschnitts 6a messbar ist.

Zusätzlich kann die Anzeigeeinheit 8 auch mit einem elektrischen Anschluss 11 versehen werden. Über den elektrischen Anschluss 11 lässt sich beispielsweise ein Kabel mit der elektrischen Anzeigeeinheit 8 verbinden, welches die aktuell von der Anzeigeeinheit 8 ausgewerteten Signale an eine übergeordnete Steuerung zur zentralen Erfassung und/oder Auswertung weiterleitet.

Gemäß Fig.2 wird die elektrische Kontaktierung zwischen Kolbenstange 4 und der Anzeigeeinheit 8 über einen Schleiferkontakt 12 realisiert. Die elektrische Kontaktierung zwischen Anzeigeelement 8 und elektrisch leitendem Zylindergehäuse 2 erfolgt - wie bereits vorstehend erwähnt - über ein gleichzeitig eine mechanische Befestigung am Zylindergehäuse 2 realisierendes Befestigungsgewinde 9. Zur Speisung des Stromkreises mit elektrischer Energie enthält die Anzeigeeinheit 8 zwar auch eine Batterie 13. Die Signalverarbeitung wird durch eine Elektronikplatine 14 mit entsprechenden elektronischen Bauelementen durchgeführt.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, anstelle einer in die Anzeigeeinheit 8 integrierten Batterie 13 über einen elektrischen Anschluss 11 per Kabel elektrische Energie an die Anzeigeeinheit 8 zur Versorgung der elektronischen Bauelemente und zur Speisung des Stromkreises zu bringen. Ferner wird darauf hingewiesen, dass auch die dynamische Dichtung 7 an der Austrittsstelle der Kolbenstange 4 aus dem Zylindergehäuse 2 mit den vorstehend beschriebenen Verschleißerkennungsmitteln ausgestattet werden kann und insoweit mit in die Verschleißerkennung einer elastomeren dynamischen Dichtung mit einbezogen werden kann.

Durch die eingangs vorgenommene Definition des Begriffs Druckmittelzylinder wird an dieser Stelle nochmals darauf hingewiesen, dass die erfindungsgemäße elektrische Einrichtung auch bei anderen druckmittelbetriebenen Komponenten, wie Mehrwegeventilen, Druckventilen und dergleichen eingesetzt werden kann, da diese eine mit dynamischen Dichtungen versehene Schieber(Kolben)-Gehäusebohrung(Zylinder)-Anordnung darstellen. Somit lässt sich die erfindungsgemäß Lösung neben der im Ausführungsbeispiel beschrieben Aktorik auch auf die Ventiltechnik anwenden.

### Bezugszeichenliste

- 1: Druckmittelzylinder
- 2: Zylindergehäuse
- 3: Kolben
- 4: Kolbenstange
- 5: dynamische Kolbendichtung
- 6: Dichtungsabschnitt
- 7: dynamische Dichtung
- 8: Anzeigeeinheit
- 9: Befestigungsgewinde
- 10: Anzeigemittel
- 11: elektrischer Anschluss
- 12: Schleiferkontakt
- 13: Batterie
- 14: Elektronikplatine

## Patentansprüche

1. Elektrische Einrichtung zur Verschleißerkennung einer elastomeren dynamischen Kolbendichtung (5) eines Druckmittelzylinders (1) mit einem elektrisch leitfähigen Zylindergehäuse (2), an dessen Innenwandung eine mit abriebdetektierenden Verschleißerkennungsmitteln (6a,6b) ausgestattete dynamische Kolbendichtung (5) zur Anlage kommt, welche mit elektrischen Leitungsmitteln über eine Kolbenstange (4) einen elektrischen Stromkreis mit dem Zylindergehäuse (2) bildet, dessen Schließen einen Dichtungsverschleiß signalisiert,
**dadurch gekennzeichnet, dass** zur Anzeige eines zu signalisierenden Dichtungsverschleißes am Druckmittelzylinder (1) eine die Kolbenstange (4) umgebende und mit dieser einerseits elektrisch in Kontakt stehende Anzeigeeinheit (8) mit optischen und/oder akustischen Anzeigemitteln (10) vorgesehen ist, welche in den Stromkreis eingefügt andererseits mit dem Zylindergehäuse (2) in elektrischem Kontakt steht.

2. Elektrische Einrichtung nach Anspruch 1,
**dadurch gekennzeichnet, dass** die elektrische Kontaktierung zwischen Anzeigeeinheit (8) und Kolbenstange (4) über einen gegen die Kolbenstange (4) drückenden Schleiferkontakt (12) oder elektrisch leitenden Elastomerkörper erfolgt.

3. Elektrische Einrichtung nach Anspruch 1,
**dadurch gekennzeichnet, dass** die Anzeigeeinheit (8) ringförmig ausgebildet ist und zylinderdeckelseitig auf den Druckmittelzylinder aufgesteckt ist.

4. Elektrische Einrichtung nach Anspruch 3,
**dadurch gekennzeichnet, dass** die elektrische Kontaktierung zwischen Anzeigeeinheit (8) und Druckmittelzylinder (2) über einen am Gehäuse der Anzeigeeinheit (8) angeordneten elektrischen Steckkontakt erfolgt.

5. Elektrische Einrichtung nach Anspruch 1,
**dadurch gekennzeichnet, dass** die Anzeigeeinheit (8) ringförmig ausgebildet ist und zylinderdeckelseitig auf den Druckmittelzylinder aufgeschraubt ist.

6. Elektrische Einrichtung nach Anspruch 5,
**dadurch gekennzeichnet, dass** die elektrische Kontaktierung zwischen Anzeigeeinheit (8) und Druckmittelzylinder (2) über ein im Gehäuse der Anzeigeeinheit (8) integriertes Befestigungsgewinde (9) erfolgt.

7. Elektrische Einrichtung nach Anspruch 1,
**dadurch gekennzeichnet, dass** die Anzeigeeinheit (8) mindestens eine von außen her sichtbare Lichtemitterdiode (LED) als Anzeigemittel (10) aufweist.

8. Elektrische Einrichtung nach Anspruch 7,
**dadurch gekennzeichnet, dass** die Anzeigemittel (8) als Zustandsanzeige in Ampellogik ausgebildet sind und insoweit aus einer roten, gelben und grünen Lichtemitterdiode (LED) besteht.

9. Elektrische Einrichtung nach Anspruch 1,
**dadurch gekennzeichnet, dass** die Anzeigeeinheit (8) mit einem elektrischen Anschluss (11) zur Weiterleitung des aktuellen Signals der Verschleißerkennung an eine übergeordnete Steuerung ausgestattet ist.

10. Elektrische Einrichtung nach Anspruch 2,
**dadurch gekennzeichnet, dass** der elektrisch leitende Elastomerkörper eine dynamische Dichtung (7) zwischen Kolbenstange (4) und Zylindergehäuse (2) bildet, die ebenfalls mit abriebdetektierenden Verschleißerkennungsmitteln ausgestattet ist und in den Stromkreis zur Signalisierung eines Dichtungsverschleißes mit einbezogen ist.

11. Druckmittelzylinder, umfassend eine elektrische Einrichtung nach einem der vorstehenden Ansprüche.

12. Druckmittelzylinder nach Anspruch 11,
**dadurch gekennzeichnet, dass** dieser als ein Pneumatikzylinder zur Erzeugung einer Stellkraft für ein Maschinenteil ausgebildet ist.

## Claims

1. An electric device for wear detection of an elastomeric dynamic piston seal (5) of a pressure cylinder (1) having an electrically conductive cylinder housing (2), wherein a dynamic piston seal (5) provided with abrasion-detecting wear detection means (6a, 6b) contacts the inner side wall of the cylinder housing (2) and, together with electric conductor means, via a piston rod (4), forms an electric circuit with the cylinder housing (2), which signals seal wear when closed,
**characterised in that**, to indicate, at the pressure cylinder (1), seal wear to be signalled, an indicator unit (8) with optical and/or acoustic indicator means (10) is provided, which surrounds the piston rod (4) and on the one hand is in electrical contact with it and which, when inserted in the electric circuit, is on the other hand in electrical contact with the cylinder housing (2).

2. The electric device according to claim 1,
**characterised in that** the electrical contact between the indicator unit (8) and the piston rod (4) is established by means of a sliding contact (12), or an electrically conductive elastomeric body, pressing against the piston rod (4).

3. The electric device according to claim 1,
**characterised in that** the indicator unit (8) has an annular configuration and is slid on the pressure cylinder on the side of the cylinder head.

4. The electric device according to claim 3,
**characterised in that** the electrical contact between the indicator unit (8) and the pressure cylinder (2) is established by means of an electric plug-in connector arranged on the housing of the indicator unit (8).

5. The electric device according to claim 1,
**characterised in that** the indicator unit (8) has an annular configuration and is screwed onto the pressure cylinder on the side of the cylinder head.

6. The electric device according to claim 5,
**characterised in that** the electrical contact between the indicator unit (8) and the pressure cylinder (2) is established by means of a mounting thread (9) integrated in the housing of the indicator unit (8).

7. The electric device according to claim 1,
**characterised in that** the indicator unit (8) comprises at least one light emitting diode (LED) visible from the outside as an indicator means (10).

8. The electric device according to claim 7,
**characterised in that** the indicator means (10) are configured as a status indicator working according to the logic of a traffic light and thus comprise one each of red, amber and green light emitting diodes (LEDs).

9. The electric device according to claim 1,
**characterised in that** the indicator unit (8) is equipped with an electric connector (11) for transmitting the current signal of the wear detection to a higher-level control.

10. The electric device according to claim 2,
**characterised in that** the electrically conductive elastomeric body forms a dynamic seal (7) between the piston rod (4) and the cylinder housing (2), which is also equipped with abrasion-detecting wear detection means and is integrated in the electric circuit for signalling seal wear.

11. A pressure cylinder, comprising an electric device according to any one of the preceding claims.

12. The pressure cylinder according to claim 11,
**characterised in that** it is configured as a pneumatic cylinder for generating an actuating force for a machine part.

## Revendications

1. Dispositif électrique pour la détection d'usure d'un joint dynamique élastomère (5) pour le piston d'un cylindre à fluide sous pression (1) comprenant un boîtier de cylindre (2) électriquement conducteur, contre la paroi intérieure duquel un joint dynamique (5) de piston, équipé de moyens de détection d'usure (6a, 6b) détectant une abrasion, vient en contact, ce joint formant avec des organes électriquement conducteurs via une tige du piston (4) un circuit électrique avec le boîtier de cylindre (2), dont la fermeture signalise une usure du joint, **caractérisé en ce que** pour l'affichage d'une usure du joint à signaliser il est prévu une unité d'affichage (8), qui entoure la tige de piston (4) et qui est d'une part en contact électrique avec celle-ci, dotée de moyens d'affichage optique et/ou acoustique (10), l'unité d'affichage étant intégrée dans le circuit électrique et en contact électrique d'autre part avec le boîtier de cylindre (2).

2. Dispositif électrique selon la revendication 1,
**caractérisé en ce que** la venue en contact électrique entre l'unité d'affichage (8) et la tige de piste en (4) a lieu via un contact frottant (12) pressé contre la tige de piston (4) ou via un corps élastomère électriquement conducteur.

3. Dispositif électrique selon la revendication 1,
**caractérisé en ce que** l'unité d'affichage (8) est réalisée sous forme annulaire et est coiffée sur le cylindre à fluide sous pression du côté du couvercle du cylindre.

4. Dispositif électrique selon la revendication 3,
**caractérisé en ce que** la venue en contact électrique entre l'unité d'affichage (8) et le cylindre à fluide sous pression (2) a lieu via un contact électrique à enfichage agencé sur le boîtier de l'unité d'affichage (8).

5. Dispositif électrique selon la revendication 1,
**caractérisé en ce que** l'unité d'affichage (8) est réalisée sous forme annulaire et est vissée sur le cylindre à fluide sous pression du côté du couvercle du cylindre.

6. Dispositif électrique selon la revendication 5,
**caractérisé en ce que** la venue en contact électrique entre l'unité d'affichage (8) et le cylindre à fluide sous pression (2) a lieu via un pas de vis de fixation (9) intégré dans le boîtier de l'unité d'affichage (8).

7. Dispositif électrique selon la revendication 1,
**caractérisé en ce que** l'unité d'affichage (8) comprend au moins une diode électroluminescente visible depuis l'extérieur (LED) à titre de moyens d'affichage (10).

8. Dispositif électrique selon la revendication 7,
**caractérisé en ce que** les moyens d'affichage (10) sont réalisés sous forme d'un affichage d'état avec une logique correspondant à des feux tricolores, et sont à cet égard formés d'une diode électroluminescente rouge, d'une diode électroluminescente jaune et d'une diode électroluminescente verte.

9. Dispositif électrique selon la revendication 1,
**caractérisé en ce que** l'unité d'affichage (8) est équipée d'une borne électrique (11) pour la transmission du signal actuel de la détection d'usure à une commande maître.

10. Dispositif électrique selon la revendication 2,
**caractérisé en ce que** le corps élastomère électriquement conducteur forme un joint dynamique (7) entre la tige de piston (4) et le boîtier de cylindre (2), ce joint étant également équipé de moyens de détection d'usure détectant une abrasion et étant intégré dans le circuit électrique pour la signalisation d'une usure du joint.

11. Cylindre à fluide sous pression comprenant un dispositif électrique selon l'une des revendications précédentes.

12. Cylindre à fluide sous pression selon la revendication 11,
**caractérisé en ce que** celui-ci est réalisé comme un cylindre pneumatique pour engendrer une force de positionnement pour une partie de machine.
